# EUROPEAN PATENT APPLICATION

(11) **EP 4 790 878 A1**
(43) Date of publication of application: **12.08.2026**
(21) Application number: 25219939.3
(22) Date of filing: 02.12.2025
(51) Int. Cl.: H02K 1/276, H02K 1/32, H02K 3/24, H02K 9/19

(54) **ROTOR MODULE WITH COOLING STRUCTURE**

(30) Priority: 11.02.2025 KR 20250017275
(71) Applicant: Hyundai Mobis Co., Ltd., Gangnam-gu Seoul 06141 (KR)
(72) Inventor: KIM, Dae Wook, 16891 Yongin-si, Gyeonggi-do (KR)
(74) Representative: Jung, Minkyu

(57) **Abstract**

The present disclosure relates to a rotor module, and more specifically, to a rotor module with a cooling structure. The rotor module with a cooling structure of the present disclosure may include a rotor core formed in a cylindrical shape in which a hollow hole passing through a central portion is formed, a cooling flow path unit in which a cooling fluid flows and which cools the rotor core, and an end plate provided so that one surface is in contact with both ends of the rotor core in an axial direction and having oil storage, spreading, and transmission functions at both ends of the rotor core. Accordingly, the rotor module with the cooling structure of the present disclosure uses oil cooling the existing end coil to directly cool a rotor assembly and further cools a stator, thereby effectively resolving heat generation and demagnetization issues.

## Description

### BACKGROUND OF THE INVENTION

### Field of the Invention

The present disclosure relates to a rotor module, and more specifically, to a rotor module with a cooling structure.

### Description of the Related Art

Heat sources of a drive motor of an electric vehicle are a coil through which current flows and an electrical steel core through which magnetic flux flows. During the operation of the motor, the temperature of the corresponding components rises, and excessive temperatures can lead to a malfunction of the motor. In order to prevent this, cooling the heat sources is crucial, and there are an oil cooling method of directly spraying oil onto the heat sources, a water cooling method of indirectly cooling the heat sources by allowing coolant to flow through water channels of a housing, etc.

In particular, since it is even difficult to cool an end coil using cooling flow paths of a stator, in the related art, a method of directly spraying a cooling fluid through circular pipes and the like has been adopted. More specifically, in the related art, the end coil has been temporarily cooled by spraying oil onto only an outer surface of the end coil through the circular pipes at both ends of a rotor assembly, and an oil spreader has been used to compensate for this, but the conventional oil spreader has a problem that two or more axial steps are provided, resulting in insufficient space utilization and increased manufacturing costs.

With the above structure, it has been difficult to cool the end coil with only the cooling fluid of the stator, resulting in the need for a two-part cooling oil spray structure so that cooling oil is sprayed to both a stator core and the end coil. In addition, with the advancement of the specifications of the electric motor, overheating and demagnetization issues have arisen in the rotor assembly, resulting in the need to cool not only the stator core and the end coil but also the rotor assembly.

### Documents of Related Art

(Patent Document 1) Korean Registration Patent No. 10-2153232 "MOTOR WITH COOLING SYSTEM" (registered on September 1, 2020)

### SUMMARY OF THE INVENTION

The present disclosure has been made in efforts to solve the above problems and is directed to providing a rotor module with a cooling structure, which can solve heat generation and demagnetization issues by mounting an end plate having oil storage, spreading, and transmission functions on both ends of a rotor core and using oil cooling an existing end coil to directly cool a rotor assembly together and then additionally cool a stator.

According to one embodiment of the present disclosure, there is provided a rotor module with a cooling structure, including a rotor core formed in a cylindrical shape in which a hollow hole passing through a central portion is formed, a cooling flow path unit in which a cooling fluid flows and which cools the rotor core, and an end plate whose one surface is provided in contact with both ends of the rotor core in an axial direction, wherein the cooling flow path unit includes at least one first flow channel which is formed to axially pass through the rotor core and cools the rotor core by receiving a cooling fluid at one end, and discharging the cooling fluid at the other end.

In addition, the end plate may include a second flow channel whose one end is formed at a point where the cooling fluid is sprayed and the other end fluidically communicates with one end of the first flow channel to transfer the cooling fluid to the first flow channel.

In addition, the second flow channel may include a 2-1 first flow path which is a groove formed in the axial direction of the rotor core and whose one end is open toward the other surface of the end plate to receive the cooling fluid, a 2-2 second flow path which is a groove formed in the axial direction of the rotor core and whose one end fluidically communicates with the 2-1 first flow path, and a 2-3 third flow path which is a hole formed in the axial direction of the rotor core and whose one end fluidically communicates with the 2-2 second flow path and the other end fluidically communicates with the first flow channel.

In addition, the 2-1 first flow path and the 2-2 second flow path may be grooves formed continuously in a circumferential direction of the rotor core.

In addition, a flow cross-sectional area of the 2-3 third flow path may be narrower than a flow cross-sectional area of the first flow channel.

In addition, the 2-3 third flow path formed on the end plate in contact with one end surface of the rotor core may be formed at a location that does not correspond to the 2-3 third flow path formed on the end plate in contact with the other end surface of the rotor core.

In addition, the end plate may include a first fluid scattering flow channel formed to pass through the end plate to be inclined at a predetermined angle without being perpendicular or parallel to axial and radial directions of the rotor core, and the first fluid scattering flow channel may have one end fluidically communicating with the 2-2 second flow path and the other end open toward the other surface of the end plate.

In addition, the first fluid scattering flow channel may communicate with the 2-2 second flow path at a location spaced a predetermined distance from the other end of the 2-2 second flow path in the radial direction of the rotor core.

In addition, the end plate may include a second fluid scattering flow channel which receives a fluid from the first flow channel and scatters the fluid to the outside of the rotor core and is provided at a location having a predetermined phase difference from the first fluid scattering flow channel with respect to a center axis of the rotor core, and the second fluid scattering flow channel may include a 2-1 first fluid scattering flow path which is a groove formed concavely on one surface of the end plate and whose one end fluidically communicates with the first flow channel and is formed to extend radially from the one end in the radial direction of the rotor core, and a 2-2 second fluid scattering flow path whose one end fluidically communicates with the 2-1 first fluid scattering flow path and which is formed to pass through the end plate to be inclined at a predetermined angle without being perpendicular or parallel to axial and radial directions of the rotor core.

In addition, the first flow channel may be formed between the hollow hole and a magnet embedded in the rotor core and has an elliptical flow cross section, and the radial direction of the rotor core may be a minor axis.

### BRIEF DESCRIPTION OF THE DRAWINGS

FIG. 1 is a partial cross-sectional view showing a rotor module with a cooling structure of the present disclosure.
FIG. 2 is a cross-sectional view of a rotor core of the present disclosure.
FIG. 3 is a plan view showing the other surface of an end plate of the present disclosure, which is not in contact with the rotor core.
FIG. 4 is a partial cross-sectional view showing a second flow channel of the present disclosure.
FIG. 5 is a perspective view showing the other surface of the end plate of the present disclosure, which is not in contact with the rotor core.
FIG. 6 is a perspective view showing one surface of the end plate of the present disclosure, which is in contact with the rotor core.
FIG. 7 is a partial cross-sectional view showing a second fluid scattering flow channel of the present disclosure.
FIG. 8 is a partial cross-sectional view showing movement of the rotor module with a cooling structure of the present disclosure.

### DETAILED DESCRIPTION OF THE INVENTION

Hereinafter, the technical spirit of the present disclosure will be described in more detail with reference to the accompanying drawings. Prior to the description, terms or words used in the present specification and claims should not be interpreted as limited to their usual or dictionary meanings and should be interpreted as meanings and concepts that conform to the technical idea of the present disclosure based on the principle that the inventor can appropriately define the concepts of the terms in order to describe his or her own invention in the best way.

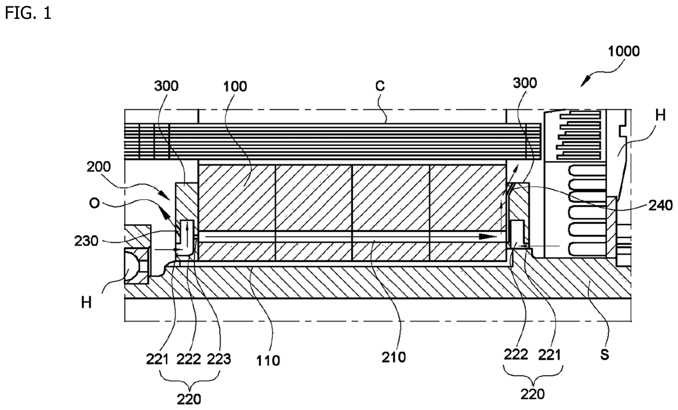

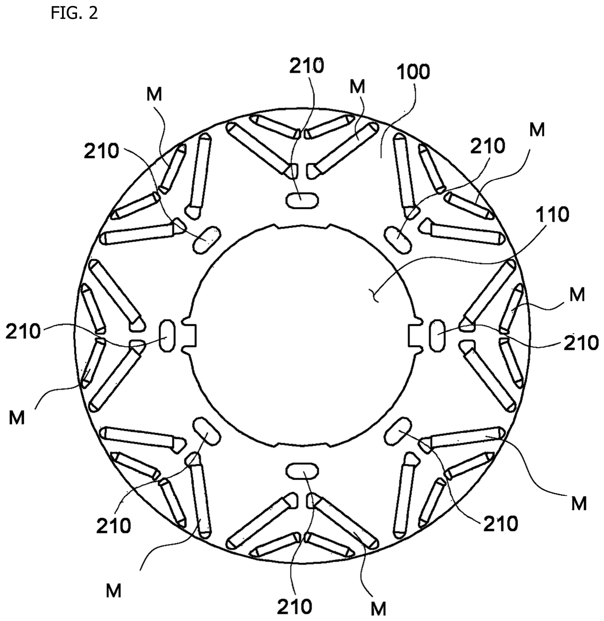

Hereinafter, a basic configuration of a rotor module 1000 with a cooling structure of the present disclosure will be described in more detail with reference to FIGS. 1 and 2.

As shown in FIG. 1, the rotor module 1000 with a cooling structure of the present disclosure may include a rotor core 100, a cooling flow path unit 200, and an end plate 300. More specifically, the rotor core 100 may be formed in a cylindrical shape in a hollow hole 110 passing through a central portion is formed. A rotor shaft S may be inserted into the hollow hole 110. In addition, the cooling flow path unit 200 may receive a cooling fluid O from a housing H outside a rotor to cool the rotor core 100, and include at least one first flow channel 210 that is formed to pass through the rotor core 100 in an axial direction and cools the rotor core 100 by receiving the cooling fluid O at one end and discharging the cooling fluid O at the other end.

Additionally, the end plate 300 of the rotor module 1000 with a cooling structure of the present disclosure may be provided such that one surface is in contact with both ends of the rotor core 100 in the axial direction. The end plate 300 may store a portion of the cooling fluid O directly sprayed from the housing H, disperse a portion of the cooling fluid O outward from the end plate 300 and the rotor core 100, that is, toward the end coil C, and transfer the portion of the cooling fluid O to the interior of the rotor core 100, that is, the first flow channel 210. Accordingly, the fluid cooling the existing end coil C may be used to directly cool the rotor assembly, and the stator may then be additionally cooled, thereby resolving heat generation and demagnetization issues.

In addition, as shown in FIG. 2, the first flow channel 210 may have an elliptical flow cross section, with a radial direction of the rotor core 100 being the minor axis. More specifically, the first flow channel 210 may be formed in a space between the hollow hole 110 of the rotor core 100 and a magnet M and formed as large as possible without interfering with the magnet M of the rotor core, etc. Accordingly, even when a slight skew occurs between axially stacked stages of the rotor core 100 due to design or assembly processes, the first flow channel 210 may be formed to communicate in the axial direction.

Furthermore, the flow cross section of the first flow channel 210 may be formed to extend in a circumference of the rotor core 100. That is, the flow cross section of the first flow channel 210 may have an elliptical shape bent into an arc shape. Accordingly, a centrifugal force of the cooling fluid O flowing through a single first flow channel 210 may be the same. In addition, a radial height at which the cooling fluid O is directly sprayed from the housing H and a radial height of the first flow channel 210 may be the same. Accordingly, it is possible to minimize a dead zone while the cooling fluid O flows.

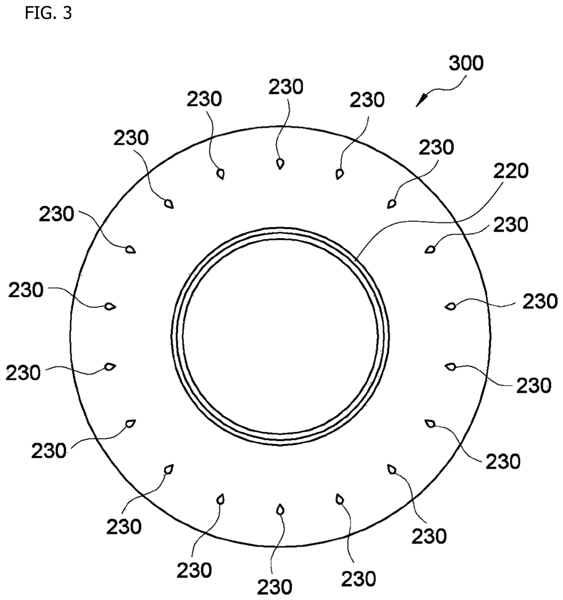

Hereinafter, an end plate 300 of the present disclosure will be described in more detail with reference to FIGS. 3 to 7.

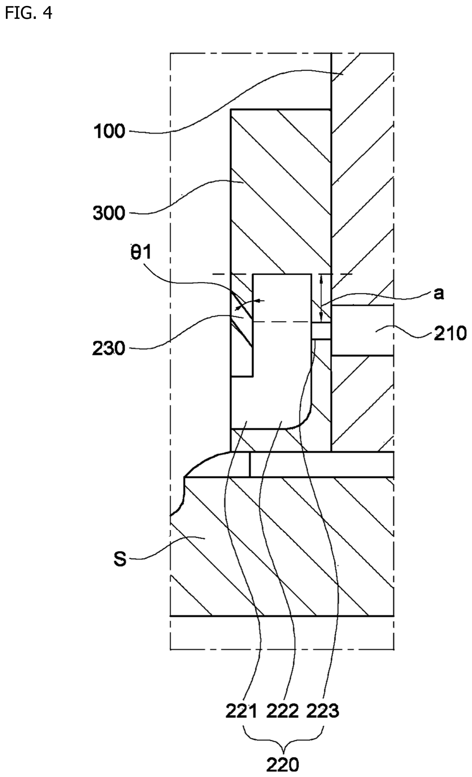

As shown in FIG. 3, the end plate 300 may include a second flow channel 220 whose one end is formed at a point where the cooling fluid O is sprayed and the other end fluidically communicates with one end of the first flow channel 210 to transfer the cooling fluid O to the first flow channel 210. In this case, as shown in FIG. 4, the second flow channel 220 may include a 2-1 first flow path 221 which is a groove formed in the axial direction of the rotor core 100 and whose one end is open toward the other surface of the end plate 300 to receive the cooling fluid O, a 2-2 second flow path 222 which is a groove formed in the radial direction of the rotor core 100 and whose one end fluidically communicates with the 2-1 first flow path 221, and a 2-3 third flow path 223 which is a hole formed in the axial direction of the rotor core 100 and whose one end fluidically communicates with the 2-2 second flow path 222 and the other end fluidically communicates with the first flow channel 210.

The 2-1 first flow path 221 may serve to receive the cooling fluid O from the outside, the 2-2 second flow path 222 may serve to store a portion of the cooling fluid O received from the 2-1 first flow path 221, and the 2-3 third flow path 223 may serve to transfer a portion of the cooling fluid O stored in the 2-2 second flow path 222 to the interior of the rotor core 100, that is, the first flow channel 210. By forming the second flow channel 220 in this way, the fluid cooling the existing end coil C may be used to directly cool the rotor assembly, and the stator may then be additionally cooled.

More specifically, a flow cross-sectional area of the 2-3 third flow path 223 may be narrower than that of the first flow channel 210. Accordingly, the cooling fluid O of the 2-3 third flow path 223 can be smoothly transferred to the first flow channel 210. In addition, the 2-3 third flow path 223 may communicate with the 2-2 second flow path 222 at a position spaced a predetermined distance a from the other end of the 2-2 second flow path 222 in the radial direction of the rotor core 100. Accordingly, the cooling fluid O stored in the 2-2 second flow path 222 may flow toward the 2-3 third flow path 223 without flowing back toward the 2-1 first flow path 221 and may be transferred to the first flow channel 210.

In addition, the end plate 300 may include a first fluid scattering flow channel 230 formed to pass therethrough to be inclined at a predetermined angle θ1 without being perpendicular or parallel to the axial and radial directions of the rotor core 100. Two or more first fluid scattering flow channels 230 may be formed in the circumferential direction of the rotor core 100, and by adjusting the number of first fluid scattering flow channels 230, the amount of cooling fluid O that is recirculated and scattered and the amount of cooling fluid O that is transferred to the rotor core 100, that is, the first flow channel 210, may be adjusted.

In addition, one end of the first fluid scattering flow channel 230 may communicate with the 2-2 second flow path 222, and the other end may be open to the other surface of the end plate 300. In addition, the angle θ1 formed by a plane perpendicular to an axis of the rotor core 100 and the first fluid scattering flow channel 230 may be an acute angle less than 90 degrees. Accordingly, the cooling fluid O scattered through the first fluid scattering flow channel 230 may be scattered toward the radially outer side of the rotor core 100, that is, the rotor assembly. Accordingly, it is possible to maximize the utilization of the cooling fluid O.

In addition, the first fluid scattering flow channel 230 may communicate with the 2-2 second flow path 222 at a position spaced a predetermined distance a from the other end of the 2-2 second flow path 222 in the radial direction of the rotor core 100. More specifically, the radial heights of the 2-3 third flow path 223 and the first fluid scattering flow channel 230 fluidically communicating with the 2-2 second flow path 222 may be the same. Accordingly, the cooling fluid O stored in the 2-2 second flow path 222 may flow toward the first fluid scattering flow channel 230 without flowing back toward the 2-1 first flow path 221 and may be scattered toward the rotor assembly.

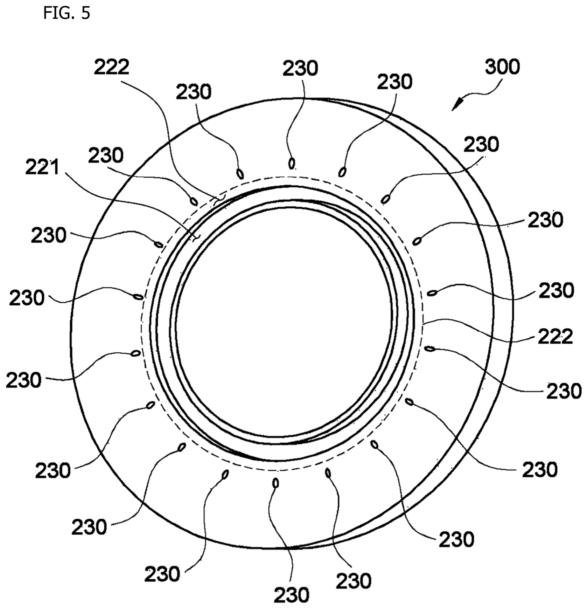

In addition, as shown in FIG. 5, the 2-1 first flow path 221 and the 2-2 second flow path 222 may be grooves continuously formed along the entire 360-degree circumference of the rotor core 100. That is, all of the cooling fluid O directly sprayed toward both ends of the rotor core 100 may be polymerized and primarily stored in one 2-1 first flow path 221 and one 2-2 second flow path 222. Accordingly, the maximum storage capacity of the cooling fluid O can be increased, and even when the cooling fluid O is sprayed unevenly at each direct spray location, the cooling fluid O may be evenly distributed to the 2-3 third flow path 223 and the first flow channel 210, thereby ensuring uniform cooling throughout the entire circumferential direction of the rotor core 100.

In addition, the 2-2 second flow path 222 may be formed as a single stage with a predetermined radial depth without a separate step in the axial direction. By forming the 2-2 second flow path 222 in such a shape, the cooling fluid O may be scattered in directions other than a tangential direction of rotation of the rotor core 100, ensuring even oil distribution. In addition, the manufacturing convenience of the end plate 300 can be improved. Accordingly, the end plate 300 may serve as a retainer and a negative balancing component.

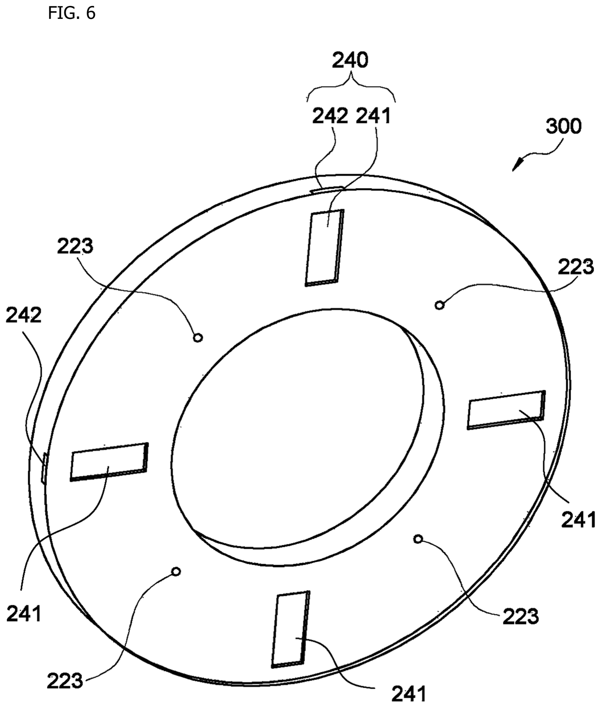

In addition, as shown in FIG. 6, the end plate 300 may include a second fluid scattering flow channel 240 that receives a fluid from the first fluid scattering flow channel 210 and scatters the fluid toward the outside of the rotor core 100. The second fluid scattering flow channel 240 may be formed on the end plate 300 in which the first fluid scattering flow channel 230 is formed and formed at a position having a predetermined phase difference with respect to a center axis of the rotor core 100 and the first fluid scattering flow channel 230. More specifically, the phase difference between the first fluid scattering flow channel 230 and the second fluid scattering flow channel 240 may be about 45 degrees. Accordingly, the cooling fluid O may be transferred from one end to the other end of the rotor core 100 in the axial direction in a specific phase and scattered to the first fluid scattering flow channel 230 and the second fluid scattering flow channel 240 and transferred from the other axial end to one end in another phase and scattered to the first fluid scattering flow channel 230 and the second fluid scattering flow channel 240.

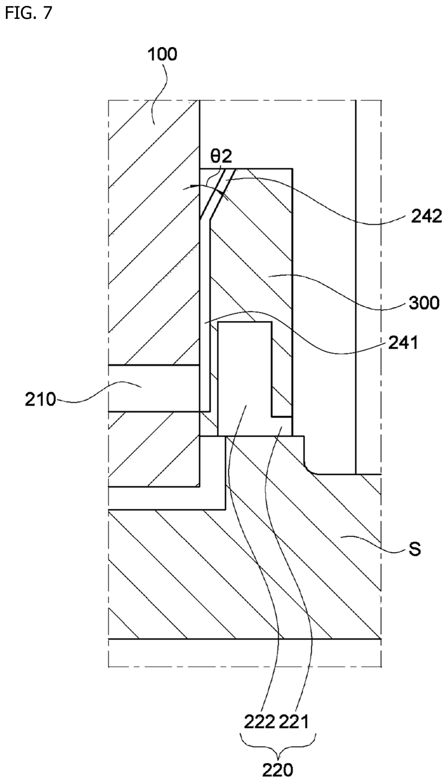

More specifically, as shown in FIG. 7, the second fluid scattering flow channel 240 may be composed of a 2-1 first fluid scattering flow path 241 and a 2-2 second fluid scattering flow path 242. The 2-1 first fluid scattering flow path 241 may be a groove formed concavely in one surface of the end plate 300, may have one end fluidically communicating with the first flow channel 210, and may be formed to extend from the one end in the radial direction of the rotor core 100. In addition, the 2-2 second fluid scattering flow path 242 may have one end fluidically communicating with the 2-1 first fluid scattering flow path 241 and may be formed to pass through the end plate 300 so that the end plate 300 is inclined at a predetermined angle without being perpendicular or parallel to the axial and radial directions of the rotor core 100.

More specifically, the 2-1 first fluid scattering flow path 241 may be a space surrounded by the axial end surfaces of the end plate 300 and the rotor core 100, and the rotor core 100 may be secondarily cooled by the cooling fluid O flowing through the 2-1 first fluid scattering flow path 241. Accordingly, it is possible to maximize the utilization of the cooling fluid O. In addition, the 2-2 second fluid scattering flow path 242 may form a predetermined angle θ2 with respect to a plane perpendicular to the axis of the rotor core 100. In this case, θ2 may be an acute angle less than 90 degrees. Accordingly, the cooling fluid O scattered through the 2-2 second fluid scattering flow path 242 may be scattered toward the radially outer side of the rotor core 100, that is, the rotor assembly. Accordingly, it is possible to maximize the utilization of the cooling fluid O.

In addition, the 2-3 third flow path 223 formed on the end plate 300 in contact with one end surface of the rotor core 100 may be formed at a location that does not correspond to the 2-3 third flow path 223 formed on the end plate 300 in contact with the other end surface of the rotor core 100. In this case, the number of first flow channels 210 may be the sum of the number of 2-3 third flow path 223 and the number of second fluid scattering flow channels 240. More specifically, the 2-3 third flow path 223 and the second fluid scattering flow channel 240 may be formed at locations corresponding to the first flow channel 210 and formed alternately in the circumferential direction.

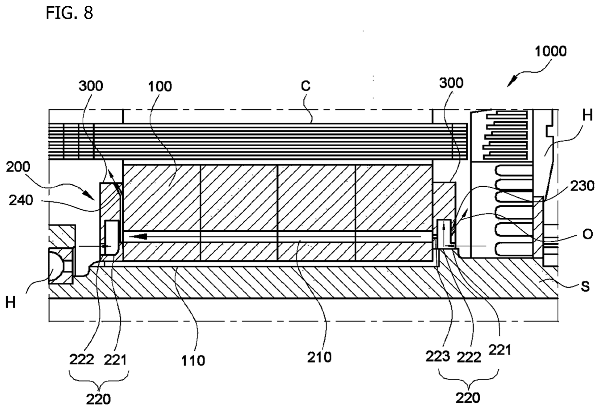

Accordingly, as shown in FIG. 8, when the cooling fluid O passes through one end and the other end of the rotor core 100 in the axial direction, the cooling fluid O may be allowed to pass through either the first fluid scattering flow channel 230 or the second fluid scattering flow channel 240 regardless of whether the cooling fluid O is sprayed onto the one end or the other end of the rotor core 100 in the axial direction. That is, in a specific phase, as shown in FIG. 1, the cooling fluid may be transferred from the one end (left side of FIG. 1) to the other end (right side of FIG. 1) of the rotor core 100 in the axial direction and sprayed through the first fluid scattering flow channel 230 provided at the one end (left side of FIG. 1) in the axial direction and the second fluid scattering flow channel 240 provided at the other end (right side of FIG. 1) in the axial direction, or as shown in FIG. 8, the cooling fluid may be transferred from the other end (right side of FIG. 8) to the one end (left side of FIG. 8) of the rotor core 100 in the axial direction and sprayed through the first fluid scattering flow channel 230 provided at the other end (right side of FIG. 8) in the axial direction and the second fluid scattering flow channel 240 provided at the one end (left side of FIG. 8) in the axial direction.

In this case, more specifically, the cooling fluid O may flow in the order of the 2-1 first flow path 221, the 2-2 second flow path 222, the first fluid scattering flow channel 230 and may then be recirculated and scattered or may flow in the order of the 2-1 first flow path 221, the 2-2 second flow path 222, the first flow channel 210, and the second fluid scattering flow channel 240 and may then be scattered after passing the rotor core 100. Accordingly, the cooling efficiency of the end coil C can be increased.

In the rotor module with a cooling structure of the present disclosure having the above configuration, it is possible to solve heat generation and demagnetization issues by mounting the end plate having oil storage, spreading, and transmission functions on both ends of the rotor core and using existing oil that cools an end coil to directly cool the rotor assembly together and then additionally cool the stator.

The technical spirit of the present disclosure should not be construed as limited to the above-described embodiments. Not only the scope of applications is diverse, but also various modifications may be made by those skilled in the art without departing from the gist of the present disclosure as claimed in the claims. Accordingly, these improvements and changes fall within the scope of the present disclosure as long as they are obvious to those skilled in the art.

### DESCRIPTION OF REFERENCE NUMERALS

1000: rotor module with cooling structure
100: rotor core
110: hollow hole
200: cooling flow path unit
210: first flow channel
220: second flow channel
221: 2-1 first flow path
222: 2-2 second flow path
223: 2-3 third flow path
230: first fluid scattering flow channel
240: second fluid scattering flow channel
241: 2-1 first fluid scattering flow path
242: 2-2 second fluid scattering flow path
300: end plate
S: rotor shaft
C: coil
O: cooling fluid
H: housing
M: magnet

## Claims

1. A rotor module with a cooling structure, the rotor module comprising:
a rotor core formed in a cylindrical shape and including a hollow hole passing through a central portion of the rotor core;
a cooling flow path unit in which a cooling fluid cooling the rotor core flows; and
an end plate, wherein a first surface of the end plate is in contact with first and second ends of the rotor core in an axial direction of the end plate,
wherein the cooling flow path unit includes at least one first flow channel disposed to axially pass through the rotor core, and
wherein the at least one first flow channel includes first and second end portions, a cooling fluid flows into the first end portion of the at least one first flow channel and is discharged through the second end portion of the at least one first flow channel to cool the rotor core.

2. The rotor module of claim 1,
wherein the end plate includes a second flow channel,
wherein a first end portion of the second flow channel is disposed at a point where the cooling fluid is sprayed and a second end portion of the second flow channel fluidically communicates with the first end portion of the first flow channel to transfer the cooling fluid to the first flow channel.

3. The rotor module of claim 2, wherein the second flow channel includes:
a first flow path which is a groove disposed in an axial direction of the rotor core, wherein one end portion of the first flow path is open toward a second surface of the end plate to receive the cooling fluid;
a second flow path which is a groove disposed in the axial direction of the rotor core, wherein a first end portion of the second flow path fluidically communicates with the first flow path; and
a third flow path which is a hole disposed in the axial direction of the rotor core, wherein a first end portion of the third flow path fluidically communicates with the second flow path and a second end portion of the third flow path fluidically communicates with the first flow channel.

4. The rotor module of claim 3, wherein the first flow path and the second flow path are the grooves disposed continuously in a circumferential direction of the rotor core.

5. The rotor module of claim 3 or 4, wherein a flow cross-sectional area of the third flow path is narrower than a flow cross-sectional area of the first flow channel.

6. The rotor module of any one of claims 3 to 5, wherein the third flow path disposed on the end plate in contact with a first end surface of the rotor core is disposed at a location that does not correspond to the third flow path disposed on the end plate in contact with a second end surface of the rotor core.

7. The rotor module of any one of claims 3 to 6,
wherein the end plate includes a first fluid scattering flow channel disposed to pass through the end plate to be inclined at a predetermined angle without being perpendicular or parallel to axial and radial directions of the rotor core, and
wherein the first fluid scattering flow channel includes a first end portion fluidically communicating with the second flow path and a second end open toward the second surface of the end plate.

8. The rotor module of claim 7, wherein the first fluid scattering flow channel fluidically communicates with the second flow path at a location spaced a predetermined distance from a second end portion of the second flow path in the radial direction of the rotor core.

9. The rotor module of claim 7 or 8, wherein the end plate includes a second fluid scattering flow channel which receives a fluid from the first flow channel and scatters the fluid to the outside of the rotor core and is disposed at a location having a predetermined phase difference from the first fluid scattering flow channel with respect to a center axis of the rotor core.

10. The rotor module of claim 9, wherein the second fluid scattering flow channel includes:
a first fluid scattering flow path which is a groove disposed concavely on the first surface of the end plate, wherein one end portion of the first fluid scattering flow path fluidically communicates with the first flow channel and the first fluid scattering flow path is disposed to extend radially from the one end in the radial direction of the rotor core; and
a second fluid scattering flow path, wherein one end portion of the second fluid scattering flow path fluidically communicates with the first fluid scattering flow path and the second fluid scattering flow path is disposed to pass through the end plate to be inclined at a predetermined angle without being perpendicular or parallel to the axial and radial directions of the rotor core.

11. The rotor module of any one of claims 1 to 10, further comprising a magnet embedded in the rotor core,
wherein the first flow channel is disposed between the hollow hole and the magnet and has an elliptical flow cross section, and
wherein the radial direction of the rotor core is a minor axis.
